# EUROPEAN PATENT SPECIFICATION

(11) **EP 3 240 712 B1**
(45) Date of publication and mention of the grant of the patent: **12.12.2018**
(21) Application number: 15826123.0
(22) Date of filing: 31.12.2015
(51) Int. Cl.: B60W 30/182, B60W 50/08, B60W 50/14, G05D 1/00

(54) **CONTROLLING AUTONOMOUS DRIVING MODE IN AN AUTONOMOUS VEHICLE**
STEUERUNG DES SELBSTÄNDIGEN FAHRMODUS IN EINEM AUTONOMEN FAHRZEUG
COMMANDE DE MODE DE CONDUITE AUTONOME DANS UN VÉHICULE AUTONOME

(30) Priority: 31.12.2014 US 201462098413 P
(43) Date of publication of application: 08.11.2017
(73) Proprietor: Robert Bosch GmbH, 70469 Stuttgart-Feuerbach (DE)
(72) Inventor: NAGY, Akos, Mountain View, CA 94040 (US); RAJARAM, Shetty, Bangalore 560037 (IN); VETTER, Joerg, 77948 Friesenheim (DE); MAMAEVA, Tatiana, 80468 Munchen (DE); KREMER, Christian, 63920 Grossheubach (DE); BECKER, Jan, Palo Alto, CA 94303 (US)
(86) International application number: PCT/US2015/068221
(87) International publication number: WO 2016/109765

(56) References cited:
- DE-A1-102012 002 318
- US-B1- 8 260 482

## Description

### BACKGROUND

The disclosure relates to methods and systems for controlling an autonomous driving mode in an autonomous vehicle.

Driver assistance systems such as, for example, adaptive cruise control and automated lane change systems have been successfully deployed to the market to increase driver comfort and safety. As these driver assistance systems progress in sophistication, less driver interaction may be required. In some cases, the driver assistance systems may provide an autonomous driving mode for portions of a trip. Autonomous driving mode enables the vehicle to drive to a destination without requiring a driver to steer, accelerate, or decelerate. Accordingly, the role of the driver has changed from that of an active driver to that of a passenger, for at least some portion of the trip.

DE 10 2012 002318 A1 describes a method for operating a motor vehicle and a motor vehicle having a driver assistance system. The motor vehicle comprises a guide device, a steering handle and/or pedal, which are connected together via decoupling device to a mechanism that enables the guidance of the motor vehicle. The driver assistance system is designed to drive the motor vehicle in an automated manner as a function of a driving parameter value.

US 8 260 482 B1 describes a vehicle including a plurality of control apparatuses including a braking apparatus, an acceleration apparatus, and a steering apparatus, a geographic position component, a force input apparatus, memory for storing a detailed map information, and a processor.

According, the invention provides a system of controlling an autonomous driving mode in an autonomous vehicle. The system includes a first selection point, a second selection point, and an electronic controller. The first selection and the second selection point are disposed on a steering wheel of the autonomous vehicle. The first selection point includes a first button. The second selection point includes a second button. The electronic controller is electrically coupled to the first selection point and the second selection point. The electronic controller is configured to detect when the first button is selected and when the second button is selected. The electronic controller is also configured to activate the autonomous driving mode when both the first button and the second button are selected for more than a first predetermined amount of time.

The invention provides a method of controlling an autonomous driving mode in an autonomous vehicle. The method includes detecting when a first button is selected. The method also includes detecting when a second button is selected. The first button and the second button are disposed on a steering wheel of the autonomous vehicle. The method further includes activating, via an electronic controller, the autonomous driving mode when both the first button and the second button are selected for more than a first predetermined amount of time.

Other aspects of the disclosure will become apparent by consideration of the detailed description and accompanying drawings.

### BRIEF DESCRIPTION OF THE DRAWINGS

FIG. 1 is a block diagram of an autonomous vehicle control system in accordance with some embodiments.
FIG. 2 illustrates an exemplary embodiment of a steering wheel for an autonomous vehicle in accordance with some embodiments.
FIGS. 3A and 3B illustrate exemplary embodiments of visual aids in accordance with some embodiments.
FIGS. 4A and 4B illustrate exemplary embodiments of visual aids in accordance with some embodiments.
FIG. 5 is a flowchart of an exemplary method of controlling an autonomous driving mode in an autonomous vehicle in accordance with some embodiments.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways.

Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect. Also, electronic communications and notifications may be performed using other known means including direct connections, wireless connections, etc.

It should also be noted that a plurality of hardware and software based devices, as well as a plurality of other structural components may be utilized to implement the disclosure. It should also be noted that a plurality of hardware and software based devices, as well as a plurality of different structural components may be used to implement the disclosure. In addition, it should be understood that embodiments of the disclosure may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the invention may be implemented in software (e.g., stored on non-transitory computer-readable medium) executable by one or more processors. As such, it should be noted that a plurality of hardware and software based devices, as well as a plurality of different structural components may be utilized to implement the invention. For example, "control units" and "controllers" described in the specification can include one or more processors, one or more memory modules including non-transitory computer-readable medium, one or more input/output interfaces, and various connections (e.g., a system bus) connecting the components.

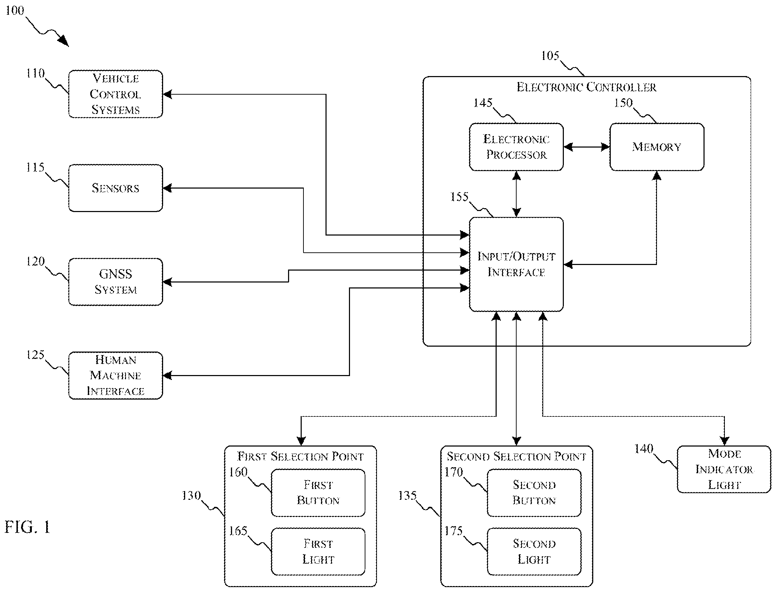

It is important to prevent unintended activation or deactivation of autonomous driving mode in an autonomous vehicle. Unintended activation or deactivation of autonomous driving mode can cause unintended maneuvering of the autonomous vehicle. FIG. 1 is a block diagram of one exemplary embodiment of an autonomous vehicle control system 100. As described more particularly below, the autonomous vehicle control system 100 may be mounted on or integrated into an autonomous vehicle (not shown) and autonomously drives the autonomous vehicle. It should be noted that, in the description that follows, the terms "vehicle," "autonomous vehicle," and "automated vehicle" should not be considered limiting. These term are used in a general way to refer to an autonomous or automated driving vehicle, which possesses varying degrees of automation (i.e., the vehicle is configured to drive itself with limited or, in some cases, no input from a driver). The systems and methods described herein may be used with any vehicle capable of operating partially or fully autonomously, being controlled manually by a driver, or some combination of both.

The term "driver," as used herein, generally refers to an occupant of an autonomous vehicle who is seated in the driver's position, operates the controls of the vehicle while in a manual mode, or provides control input to the vehicle to influence the autonomous operation of the vehicle. The term "passenger," as used herein, generally refers to an occupant of the autonomous vehicle who passively rides in the autonomous vehicle without controlling the driving operations of the autonomous vehicle. However, both the driver and passenger of the autonomous vehicle may share some of the other's role. For example, the driver may hand over the driving controls to the autonomous vehicle control system 100 and ride in the autonomous vehicle as a passenger for some or all of a trip.

The term "trip," as used herein, refers to the driving (manually or autonomously) of the autonomous vehicle from a starting point to a final destination point, with or without one or more waypoints in between. For example, a trip may start at a driver's home (i.e., the starting point), include a stop to pick up a passenger at the passenger's home (i.e., a waypoint), and continue to the workplace of the driver and the passenger (i.e., the destination).

In the example illustrated, the autonomous vehicle control system 100 includes an electronic controller 105, vehicle control systems 110, sensors 115, a GNSS (global navigational satellite system) system 120, a human machine interface (HMI) 125, a first selection point 130, a second selection point 135, and a mode indicator light 140. The components of the autonomous vehicle control system 100 along with other various modules and components are electrically coupled to each other by or through one or more control or data buses, which enable communication therebetween. The use of control and data buses for the interconnection between, and communication among, the various modules and components would be known to a person skilled in the art in view of the disclosure described herein. In alternative embodiments, some or all of the components of the autonomous vehicle control system 100 may be communicatively coupled using suitable wireless modalities (e.g, Bluetooth™ or near field communication). For ease of description, the autonomous vehicle control system 100 illustrated in FIG. 1 includes one of each of the foregoing components. Alternative embodiments may include one or more of each component, or may exclude or combine some components. The electronic controller 105 controls the vehicle control systems 110, the sensors 115, the GNSS system 120, and the HMI 125 to autonomously control the autonomous vehicle according to the methods described herein. In some embodiments, the electronic controller 105 controls the vehicle control systems 110, the sensors 115, the GNSS system 120, and the HMI 125 by transmitting control signals or instructions to these devices and systems.

The electronic controller 105 includes an electronic processor 145 (e.g., a microprocessor, application specific integrated circuit, etc.), a memory 150, and an input/output interface 155. The memory 150 may be made up of one or more non-transitory computer-readable media, and includes at least a program storage area and a data storage area. The program storage area and the data storage area can include combinations of different types of memory, such as read-only memory ("ROM"), random access memory ("RAM") (e.g., dynamic RAM ("DRAM"), synchronous DRAM ("SDRAM"), etc.), electrically erasable programmable read-only memory ("EEPROM"), flash memory, a hard disk, an SD card, or other suitable magnetic, optical, physical, or electronic memory devices. The electronic processor 145 is coupled to the memory 150 and the input/output interface 155. The electronic processor 145 sends and receives information (e.g., from the memory 150 and/or the input/output interface 155), and processes the information by executing one or more software instructions or modules stored in the memory 150 or another non-transitory computer readable medium. The software can include firmware, one or more applications, program data, filters, rules, one or more program modules, and other executable instructions. The electronic processor 145 is configured to retrieve from the memory 150 and execute, among other things, software for autonomous vehicle control including the methods as described herein.
The input/output interface 155 transmits and receives information from devices external to the electronic controller 105 (e.g., over one or more wired and/or wireless connections), such as the vehicle control systems 110, the sensors 115, the GNSS system 120, the HMI 125, the first selection point 130, the second selection point 135, and the mode indicator light 140. The input/output interface 155 receives user input, provides system output, or a combination of both. As described herein, user input from a driver or passenger of the autonomous vehicle may be provided via, for example, the HMI 125. The input/output interface 155 may also include other input and output mechanisms that for brevity are not described herein but which may be implemented in hardware, software, or a combination of both.

It should be understood that although FIG. 1 illustrates only a single electronic processor 145, memory 150, and input/output interface 155, alternative embodiments of the electronic controller 105 may include multiple electronic processors, memories, and/or input/output interfaces. It should also be noted that the autonomous vehicle control system 100 may include other electronic controllers, each including similar components as, and configured similarly to, the electronic controller 105. In some embodiments, the electronic controller 105 is implemented partially or entirely on a semiconductor (e.g., a field-programmable gate array ("FPGA") semiconductor) chip. Similarly, the various modules and controllers described herein may be implemented as individual controllers, as illustrated, or as components of a single controller. In some embodiments, a combination of approaches may be used.

The electronic processor 145 uses the input/output interface 155 to send and receive information or commands to and from the vehicle control systems 110 (e.g., over a vehicle communication bus, such as a controller area network (CAN) bus). The vehicle control systems 110 include components (e.g., actuators, motors, and controllers) to control the various vehicle control systems (e.g., braking, steering, and engine power output). For the sake of brevity, the vehicle control systems 110 will not be described in greater detail. The electronic controller 105 controls the vehicle control systems 110 to autonomously drive the autonomous vehicle. In some embodiments, the electronic controller 105 controls the vehicle control systems 110 to automatically drive the autonomous vehicle without driver intervention or input for the entirety of a trip. In other embodiments, the electronic controller 105 controls the vehicle control systems 110 to drive the autonomous vehicle for a portion of a trip, and to allow or require a driver to manually operate the vehicle for one or more portions of the trip.

The sensors 115 are coupled to the electronic controller 105 determine one or more attributes of the autonomous vehicle. The sensors 115 communicate information regarding those attributes to the electronic controller 105 using, for example, electrical signals. The vehicle attributes include, for example, the position of the autonomous vehicle or portions or components of the autonomous vehicle, the movement of the autonomous vehicle or portions or components of the autonomous vehicle, the forces acting on the autonomous vehicle or portions or components of the autonomous vehicle, and the proximity of the autonomous vehicle to other vehicles or objects (stationary or moving). The sensors 115 may include, for example, vehicle control sensors (e.g., sensors that detect accelerator pedal position, brake pedal position, and steering wheel position (steering angle)), wheel speed sensors, vehicle speed sensors, yaw sensors, force sensors, odometry sensors, and vehicle proximity sensors (e.g., camera, radar, ultrasonic). The electronic controller 105 receives and interprets the signals received from the sensors 115 to determine values for the various vehicle attributes, including, for example, vehicle speed, steering angle, vehicle position, pitch, yaw, and roll. The electronic controller 105 controls the vehicle control systems 110 to autonomously control the autonomous vehicle (for example, by generating braking signals, acceleration signals, steering signals) based at least in part on the information received from the sensors 115. Some of the sensors 115 may be integrated into the vehicle control systems 110. Alternatively or in addition, some of the sensors 115 may be deployed on the autonomous vehicle separately from the vehicle control systems 110.

The GNSS (global navigation satellite system) system 120 receives radio-frequency signals from orbiting satellites using one or more antennas and receivers (not shown). The GNSS system 120 determines geo-spatial positioning (i.e., latitude, longitude, altitude, and speed) for the autonomous vehicle based on the received radio-frequency signals. The GNSS system 120 communicates this positioning information to the electronic controller 105. The electronic controller 105 may use this information in conjunction with or in place of information received from the sensors 115 when autonomously controlling the autonomous vehicle. The electronic controller 105 may also control the GNSS system 120 to plan routes and navigate the autonomous vehicle. GNSS systems are known, and will not be described in greater detail. In some embodiments, the GNSS system 120 may operate using the GPS (global positioning system). Alternative embodiments may use a regional satellite navigation system, and/or a land-based navigation system in conjunction with, or in place of, the GNSS system 120.

The human machine interface (HMI) 125 provides an interface between the autonomous vehicle control system 100 and the driver. The HMI 125 is electrically coupled to the electronic controller 105 and receives input from the driver, receives information from the electronic controller 105, and provides feedback (e.g., audio, visual, haptic, or a combination thereof) to the driver based on the received information. The HMI 125 provides suitable input mechanisms, such as a button, a touch-screen display having menu options, voice recognition, etc. for providing inputs from the driver that may be used by the electronic controller 105 to control the autonomous vehicle.

The HMI 125 provides visual output such as, for example, graphical indicators (i.e., fixed or animated icons), lights, colors, text, images, combinations of the foregoing, and the like. The HMI 125 includes a suitable display mechanism for displaying the visual output, for example, an instrument cluster, a mirror, a heads-up display, a center console display screen (for example, a liquid crystal display (LCD) touch-screen, or an organic light-emitting diode (OLED) touch-screen), or other suitable mechanisms. In alterative embodiments, the display screen may not be a touch-screen. In some embodiments, the HMI 125 displays a graphical user interface (GUI) (for example, generated by the electronic processor 145 from instructions and data stored in the memory 150 and presented on the display screen) that enables a user to interact with the autonomous vehicle control system 100. The HMI 125 may also provide audio output to the driver such as a chime, buzzer, voice output, or other suitable sound through a speaker included in the HMI 125 or separate from the HMI 125. In some embodiments, the HMI 125 provides haptic outputs to the driver by vibrating one or more vehicle components (e.g., the vehicle's steering wheel and the driver's seat), such as through the use of a vibration motor. In some embodiments, the HMI 125 provides a combination of visual, audio, and haptic outputs.

The first and second selection points 130, 135 are used to activate and deactivate autonomous driving mode. The first selection point 130 includes a first button 160 and a first light 165. The second selection point 135 includes a second button 170 and a second light 175. The first and second buttons 160, 170 can each be placed in a selected state or in an unselected state. The electronic controller 105 is electrically coupled to the first button 160 and detects when the first button 160 is selected (i.e., placed in the selected state) and unselected (i.e., placed in the unselected state). The electronic controller 105 is also electrically coupled to the second button 170 and detects when the second button 170 is selected and unselected.

The electronic controller 105 activates autonomous driving mode when both the first button 160 and the second button 170 are continuously selected for more than a first predetermined amount of time (e.g., three seconds). Also, the electronic controller 105 deactivates autonomous driving mode when both the first button 160 and the second button 170 are selected simultaneously for more than a second predetermined amount of time (e.g., two seconds). Requiring the selection of two separate buttons for a predetermined amount of time prevents unintended activation or deactivation of autonomous driving mode. In some embodiments, the first predetermined amount of time is greater than the second predetermined amount of time. In some embodiments, the electronic controller 105 deactivates autonomous driving mode immediately when a brake pedal of the autonomous vehicle is pressed or a certain amount of torque is applied to a steering wheel of the autonomous vehicle.

In some embodiments, the first and second buttons 160, 170 include a type of push button. In such embodiments, the first button 160 is placed in the selected state (i.e., is selected) when its push button is pressed, and is placed in the unselected state (i.e., is unselected) when its push button is not pressed. Also, in such embodiments, the second button 170 is placed in the selected state when its push button is pressed, and is placed in the unselected state when its push button is not pressed.

In other embodiments, the first and second buttons 160, 170 include a type of capacitive sensor. In such embodiments, the first button 160 is placed in the selected state when its capacitive sensor is touched (e.g., by a hand or a finger of the driver), and is placed in the unselected state when its capacitive sensor is not touched. Also, in such embodiments, the second button 170 is placed in the selected state when its capacitive sensor is touched, and is placed in the unselected state when its capacitive sensor is not touched.

The first light 165 is positioned adjacent to the first button 160 and illuminates the first button 160 when it is turned on. The second light 175 is positioned adjacent to the second button 170 and illuminates the second button 170 when it is turned on. The first and second lights 165, 175 are electrically coupled to the electronic controller 105. The electronic controller 105 sends signals to the first and second lights 165, 175 which control the intensities and colors of lights emitted by the first and second lights 165, 175. When autonomous driving mode is available to be activated, the electronic controller 105 turns on the first and second lights 165, 175 to indicate where the driver should press to activate autonomous driving mode. In some embodiments, the electronic controller 105 sends signals which cause the first and second lights 165, 175 to emit a specific color of light (e.g., green) when autonomous driving mode is available to be activated. In some embodiments, the electronic controller 105 sends signals which cause the first and second lights 165, 175 to emit a specific color of light (e.g., red) when autonomous driving mode is available to be deactivated.

The mode indicator light 140 is electrical coupled to the electronic controller 105. The electronic controller 105 sends signals to the mode indicator light 140 which control the intensity and color of light emitted by the mode indicator light 140. In some embodiments, the electronic controller 105 turns on the mode indicator light 140 when autonomous driving mode is activated. In such embodiments, the electronic controller 105 turns off the mode indicator light 140 when autonomous driving mode is deactivated. In other embodiments, the electronic controller 105 sends signals which cause the mode indicator light 140 to emit a first color of light (e.g., blue) when autonomous driving mode is activated and a second color of light (e.g., white) when autonomous driving mode is deactivated.

The mode indicator light 140, the first light 165, and the second light 175, can each include one or more of any type or types of lighting elements (e.g., light-emitting diodes (LEDs), incandescent, fluorescent, etc.). In some embodiments, the mode indicator light 140, the first light 165, and the second light 175 each includes a plurality of different colored lights.

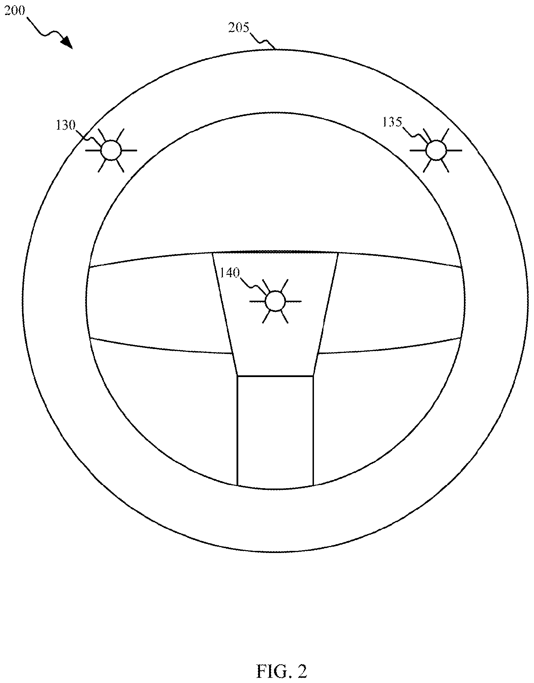

The first selection point 130, the second selection point 135, and the mode indicator light 140 are disposed on a steering wheel 200 of the autonomous vehicle, as illustrated in FIG. 2. The first and second selection points 130, 135 are positioned on opposite halves of an outer rim 205 of the steering wheel 200. In some embodiments, the first and second selection points 130, 135 are spaced apart on the steering wheel 200 such that selecting both the first and second buttons 160, 170 at the same time requires use of both of the driver's hands. In other embodiments, the first and second selection points 130, 135 can be placed at other positions on the steering wheel 200.

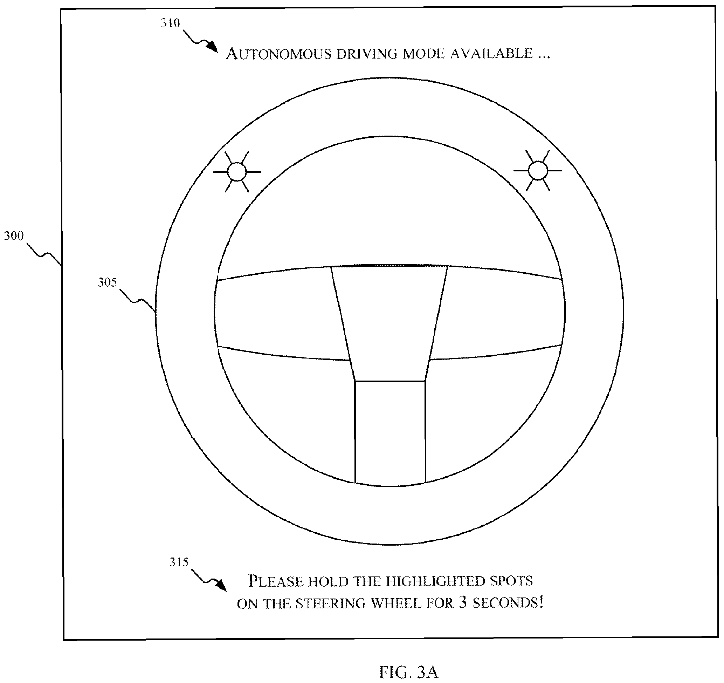

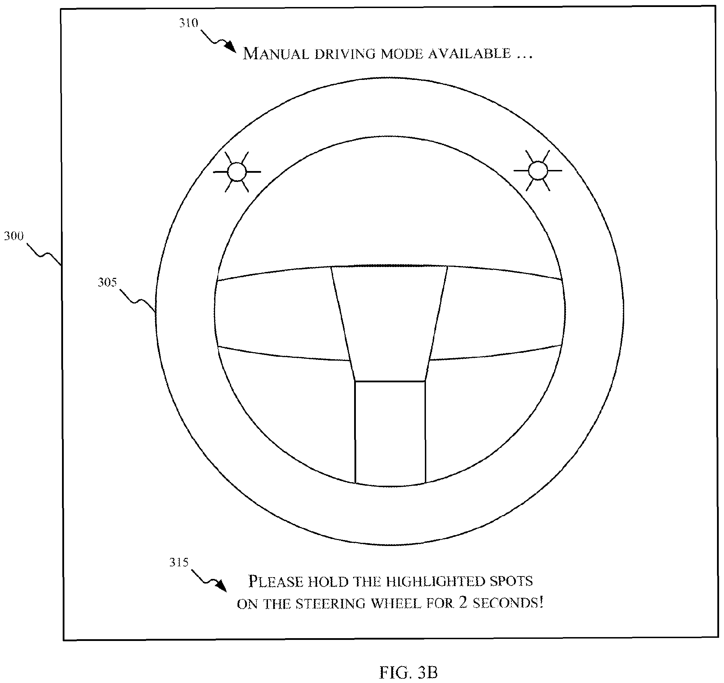

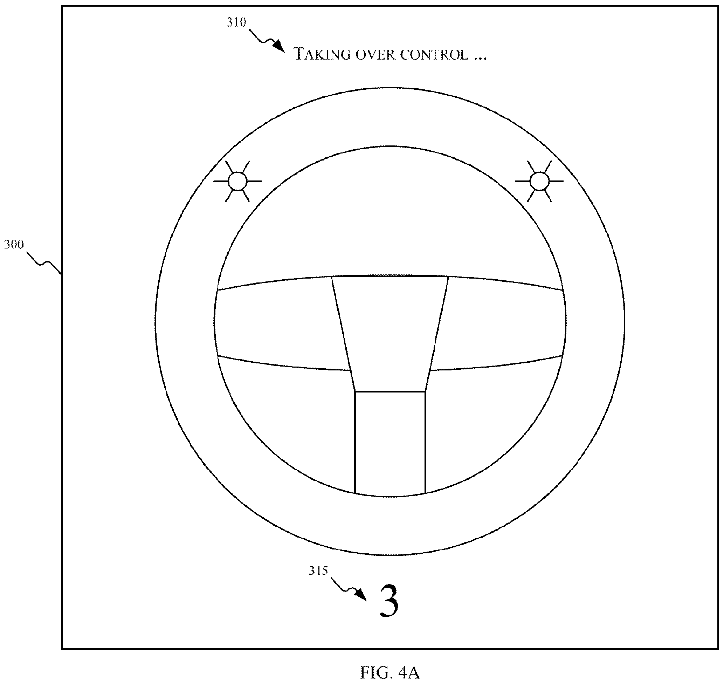

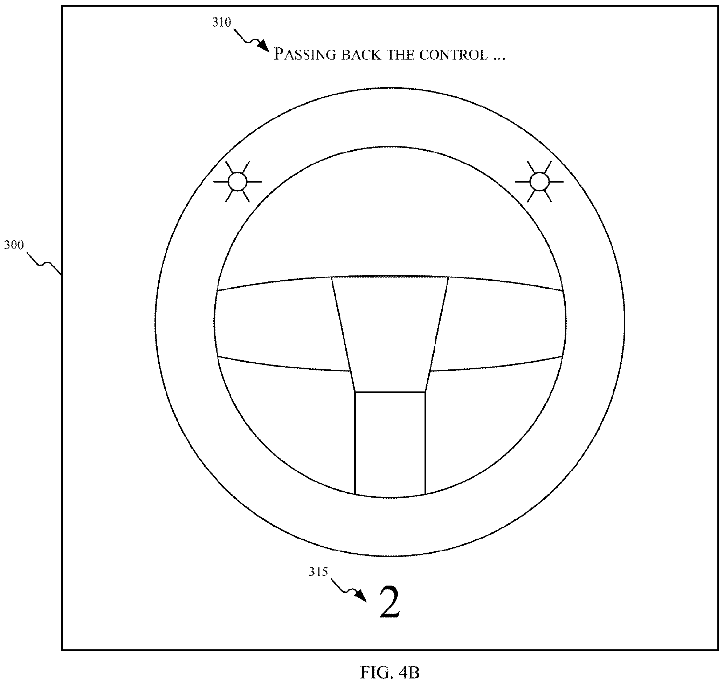

FIGS. 3A, 3B, 4A, and 4B illustrate exemplary embodiments of a visual aid 300, which may be generated and displayed by the electronic controller 105 using the HMI 125. In some embodiments, the visual aid 300 includes a steering wheel image 305, a descriptor 310, and an instructor 315. Alternative embodiments of the visual aid 300 include alternative shapes and placements of the steering wheel image 305, the descriptor 310, and the instructor 315. The steering wheel image 305 is an image or a graphical representation of the steering wheel 200. The steering wheel image 305 highlights the positions of the first and second selection points 130, 135 on the steering wheel 200 to the driver. For example, the steering wheel image 305 is displayed with glowing lights at the positions of the first and second selection points 130, 135.

The descriptor 310 is a graphical element displaying a text-based message including information about the driving mode. For example, the descriptor 310 may display an indication that autonomous driving mode can be activated (see FIG. 3A), an indication that manual driving mode can be activated (see FIG. 3B), an indication that autonomous driving mode is activating (see FIG. 4A), or an indication that autonomous driving mode is deactivating (see FIG. 4B).

The instructor 315 is a graphical element displaying a text-based message including information about changing the driving mode. For example, the instructor 315 may display instructions for activating autonomous driving mode (see FIG. 3A), instructions for deactivating autonomous driving mode (see FIG. 3B), or a visual countdown (see FIGS. 4A and 4B). In some embodiments, the instructor 315 displays instructions for activating autonomous driving mode when autonomous driving mode is inactive and one or both of the first and second buttons 160, 170 is unselected. In some embodiments, the instructor 315 displays instructions for deactivating autonomous driving mode when autonomous driving mode is active and one or both of the first and second buttons 160, 170 is unselected. In some embodiments, the instructor 315 displays a visual countdown when both the first and second buttons are selected 160, 170 (see FIGS. 4A and 4B). In some embodiments, the electronic controller 105 generates an audible countdown using the HMI 125 when both the first and second buttons 160, 170 are selected 160, 170.

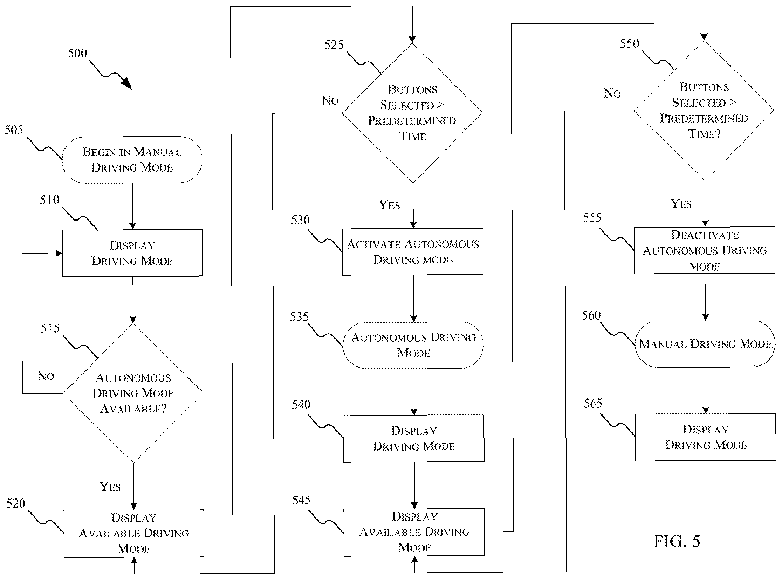

As noted above, autonomous vehicles enable the driver to either manually control the vehicle, or be driven as a passenger (e.g., in autonomous driving mode) for one or more portions of a trip. Accordingly, FIG. 5 illustrates an exemplary method 500 for operating the autonomous vehicle control system 100 to activate and deactivate autonomous driving mode during such mixed-mode trips. As an example, the method 500 is described in terms of a driver commuting from home to a workplace. In this example, the autonomous vehicle is in manual mode for the first portion of the trip (e.g., from the driver's home to a freeway; the vehicle is in autonomous driving mode for the second portion of the trip, on the freeway; and the vehicle enters manual mode again for the final portion of the trip, from the freeway exit to the driver's workplace. This should not be considered limiting. Skilled artisans will appreciate that the concepts embodied in the example described may be applied to any trip in which at least one transition between autonomous driving mode and manual driving mode (or vice versa) is made.

Before the trip begins, the driver of the autonomous vehicle inputs information describing the trip, including the destination, route, and preferences for manual or autonomous mode for portions of the trip into the electronic controller 105 using, for example, the GNSS system 120 and the HMI 125. In some embodiments, the electronic controller 105 is configured to use the GNSS system 120 to automatically plan the trip (given a starting point and a destination) and choose either manual driving mode or autonomous driving mode for portions of the trip based on, for example, the type of roads involved, traffic conditions, user preferences, and the like.

Returning to FIG. 5, at block 505, the trip begins with the autonomous vehicle operating in manual driving mode, in which the driver may operate the autonomous vehicle similarly to a conventional non-autonomous vehicle, or autonomous driving mode, awaiting instructions from the driver to begin operating. When in a manual portion of a trip, the electronic controller 105 controls the mode indicator light 140 to indicate manual driving mode, at block 510. In some embodiments, the electronic controller 105 turns off the mode indicator light 140 to indicate manual driving mode. In other embodiments, the electronic controller 105 controls the mode indicator light 140 to emit a specific color of light (e.g., white) to indicate manual driving mode.

At block 515, the electronic controller 105 determines whether autonomous driving mode is available. In the example illustrated, the electronic controller 105 determines that autonomous driving mode is available when the autonomous vehicle is approaching an autonomous portion of the trip. In alternative embodiments, the electronic controller 105 may be configured to determine that autonomous driving mode is available after a predetermined duration (in distance or time) of manual driving mode usage has elapsed, based on traffic conditions, based on weather conditions, or based on some other thresholds or criteria, as determined either by the driver or automatically by the electronic controller 105.

When autonomous driving mode is not available, the electronic controller 105 controls the mode indicator light 140 to continue to indicate manual driving mode, at block 510. For example, the mode indicator light 140 is turned off.

When autonomous driving mode is available, the electronic controller 105 controls the first light 165 and the second light 175 to indicate that autonomous driving mode is available, at block 520. In some embodiments, the electronic controller 105 turns on the first and second lights 165, 175 to indicate that autonomous driving mode is available. In some embodiments, the electronic controller 105 controls the first and second lights 165, 175 to emit a specific color of light (e.g., green) to indicate that autonomous driving mode is available. In some embodiments, the electronic controller 105 also controls the HMI 125 to indicate that autonomous driving mode is available, using the visual aid 300, at block 520 (see FIG. 3A). The steering wheel image 305 highlights the positions of the first and second selection points 130, 135 on the steering wheel 200. The descriptor 310 shows that autonomous driving mode can be activated. The instructor 315 display instructions for activating autonomous driving mode.

At block 525, the electronic controller 105 determines when both the first and second buttons 160, 170 have been continuously selected for at least the first predetermined amount of time. In some embodiments, the electronic controller 105 controls the HMI 125 to indicate when both the first and second buttons 160, 170 are selected, using the visual aid 300, at block 525 (see FIG. 4A). The descriptor 310 shows that autonomous driving mode is being activated. The instructor 315 displays a visual countdown. In some embodiments, the electronic controller 105 controls the HMI 125 to generate an audible countdown when both the first and second buttons 160, 170 are selected.

When one or both of the first and second buttons 160, 170 is unselected before the first predetermined amount of time (e.g., during the visual and/or audible countdown), the electronic controller 105 controls the HMI 125 to indicate that autonomous driving mode can be activated, using the visual aid 300, at block 520 (see FIG. 3A). For example, the descriptor 310 shows that autonomous driving mode can be activated.

When both the first and second buttons 160, 170 have been continuously selected for at least the first predetermined amount of time, autonomous driving mode is activated, at block 530. In some embodiments, the electronic controller 105 controls the HMI 125 to generate an audible tone or beep to indicate activation of autonomous driving mode.

When operating in autonomous driving mode (block 535), the electronic controller 105 controls the mode indicator light 140 to indicate autonomous driving mode, at block 540. In some embodiments, the electronic controller 105 turns on the mode indicator light 140 to indicate autonomous driving mode. In other embodiments, the electronic controller 105 controls the mode indicator light 140 to emit a specific color of light (e.g., blue) to indicate autonomous driving mode.

At block 545, the electronic controller 105 controls the first light 165 and the second light 175 to indicate that manual driving mode is available. In some embodiments, the electronic controller 105 turns on the first and second lights 165, 175 to indicate that manual driving mode is available. In some embodiments, the electronic controller 105 controls the first and second lights 165, 175 to emit a specific color of light (e.g., red) to indicate that manual driving mode is available. In some embodiments, the electronic controller 105 also controls the HMI 125 to indicate that manual driving mode is available, using the visual aid 300, at block 545 (see FIG. 3B). The steering wheel image 305 highlights the positions of the first and second selection points 130, 135 on the steering wheel 200. The descriptor 310 shows that manual driving mode is available. The instructor 315 display instructions for deactivating autonomous driving mode.

At block 550, the electronic controller 105 determines when both the first and second buttons 160, 170 have been continuously selected for at least the second predetermined amount of time. In some embodiments, the electronic controller 105 controls the HMI 125 to indicate when both the first and second buttons 160, 170 are selected, using the visual aid 300, at block 550 (see FIG. 4B). The descriptor 310 shows that autonomous driving mode is being deactivated. The instructor 315 displays a visual countdown. In some embodiments, the electronic controller 105 controls the HMI 125 to generate an audible countdown when both the first and second buttons 160, 170 are selected.

When one or both of the first and second buttons 160, 170 is unselected before the second predetermined amount of time (e.g., during the visual and/or audible countdown), the electronic controller 105 controls the HMI 125 to indicate that manual driving mode is available, using the visual aid 300, at block 545 (see FIG. 3B). For example, the instructor 315 displays instructions for deactivating autonomous driving mode.

When both the first and second buttons 160, 170 have been continuously selected for at least the second predetermined amount of time, autonomous driving mode is deactivated (i.e., manual driving mode is activated), at block 555. In some embodiments, the electronic controller 105 controls the HMI 125 to generate an audible tone or beep to indicate deactivation of autonomous driving mode.

When operating in manual driving mode (block 560), the electronic controller 105 controls the mode indicator light 140 to indicate manual driving mode, at block 565. In some embodiments, the electronic controller 105 turns off the mode indicator light 140 to indicate autonomous driving mode. In other embodiments, the electronic controller 105 controls the mode indicator light 140 to emit a specific color of light (e.g., white) to indicate manual driving mode.

Thus, the present disclosure provides, among other things, a system for activating and deactivating an autonomous driving mode in an autonomous vehicle. Various features and advantages of the invention are set forth in the following claims.

## Claims

1. A system of controlling an autonomous driving mode in an autonomous vehicle, the system comprising:
a first selection point (130) disposed on a steering wheel (200) of the autonomous vehicle and including a first button (160);
a second selection point (135) disposed on the steering wheel (200) of the autonomous vehicle and including a second button (170); and
an electronic controller (105), electrically coupled to the first selection point (130) and the second selection point (135), the electronic controller (105) configured to:
detect when the first button (160) is selected,
detect when the second button (170) is selected, and
activate the autonomous driving mode when both the first button (160) and the second button (170) are selected for more than a first predetermined amount of time.

2. The system of claim 1, wherein the first selection point (130) and the second selection point (135) are positioned on opposite halves of an outer rim (205) of the steering wheel (200).

3. The system of claim 1, wherein the electronic controller (105) is further configured to:
deactivate the autonomous driving mode when both the first button (160) and the second button (170) are selected for a second predetermined amount of time while the autonomous driving mode is active.

4. The system of claim 3, wherein the first predetermined amount of time is greater than the second predetermined amount of time.

5. The system of claim 1, wherein the first button (160) includes a push button, wherein the first button (160) is selected when the push button is pressed.

6. The system of claim 1, wherein the first button (160) includes a capacitive sensor, wherein the first button (160) is selected when the capacitive sensor is touched.

7. The system of claim 1, wherein the first selection point (130) includes a light positioned to illuminate the first button (160), wherein the electronic controller (105) is further configured to turn on the light when the autonomous driving mode is available.

8. The system of claim 1, further comprising a mode indicator light (140) disposed on the steering wheel (200) of the autonomous vehicle and electrically coupled to the electronic controller (105), wherein the electronic controller (105) is further configured to turn on the mode indicator light (140) when the autonomous driving mode is activated.

9. The system of claim 1, further comprising a human machine interface (125) electrically coupled to the electronic controller (105).

10. The system of claim 9, wherein the electronic controller (105) is further configured to display, via the human machine interface (125), at least one selected from a group consisting of a steering wheel image (305) and instructions for activating the autonomous driving mode.

11. The system of claim 9, wherein the electronic controller (105) is further configured to display, via the human machine interface (125), a visual countdown when both the first button (160) and the second button (170) are selected.

12. The system of claim 9, wherein the electronic controller (105) is further configured to generate, via the human machine interface (125), an audible countdown when both the first button (160) and the second button (170) are selected.

13. The system of claim 9, wherein the electronic controller (105) is further configured to generate, via the human machine interface (125), an audible tone when the autonomous driving mode is activated.

14. A method of controlling an autonomous driving mode in an autonomous vehicle, the method comprising:
detecting when a first button (160) is selected;
detecting when a second button (170) is selected; and
activating, via an electronic controller (105), the autonomous driving mode when both the first button (160) and the second button (170) are selected for more than a first predetermined amount of time,
wherein the first button (160) and the second button (170) are disposed on a steering wheel (200) of the autonomous vehicle.

15. The method of claim 14, further comprising:
deactivating, via the electronic controller (105), the autonomous driving mode when both the first button (160) and the second button (170) are selected for a second predetermined amount of time while the autonomous driving mode is active.

16. The method of claim 15, wherein the first predetermined amount of time is greater than the second predetermined amount of time.

17. The method of claim 14, further comprising:
illuminating, via a first light (165), the first button (160) when the autonomous driving mode is available; and
illuminating, via a second light (175), the second button (170) when the autonomous driving mode is available.

18. The method of claim 14, further comprising:
turning on a mode indicator light (140) when the autonomous driving mode is activated, wherein the mode indicator light (140) is disposed on the steering wheel (200) of the autonomous vehicle.

19. The method of claim 14, further comprising:
displaying, via a human machine interface (125), a visual countdown when both the first button (160) and the second button (170) are selected.

20. The method of claim 14, further comprising:
generating, via a human machine interface (125), an audible countdown when both the first button (160) and the second button (170) are selected.

## Patentansprüche

1. System zum Steuern eines autonomen Fahrmodus in einem autonomen Fahrzeug, das System umfassend:
einen ersten Auswahlpunkt (130), der an einem Lenkrad (200) des autonomen Fahrzeugs angeordnet ist und eine erste Taste (160) einschließt;
einen zweiten Auswahlpunkt (135), der an dem Lenkrad (200) des autonomen Fahrzeugs angeordnet ist und eine zweite Taste (170) einschließt; und
einen elektronischen Controller (105), der elektrisch an den ersten Auswahlpunkt (130) und den zweiten Auswahlpunkt (135) gekoppelt ist, wobei der elektronische Controller (105) zu Folgendem konfiguriert ist:
Erfassen, wann die erste Taste (160) ausgewählt wird,
Erfassen, wann die zweite Taste (170) ausgewählt wird, und
Aktivieren des autonomen Fahrmodus, wenn sowohl die erste Taste (160) als auch die zweite Taste (170) für mehr als eine erste vorher festgelegte Dauer ausgewählt wird.

2. System nach Anspruch 1, wobei der erste Auswahlpunkt (130) und der zweite Auswahlpunkt (135) an gegenüberliegenden Hälften eines Außenrands (205) des Lenkrads (200) angeordnet sind.

3. System nach Anspruch 1, wobei der elektronische Controller (105) ferner zu Folgendem konfiguriert ist:
Deaktivieren des autonomen Fahrmodus, wenn sowohl die erste Taste (160) als auch die zweite Taste (170) für eine zweite vorher festgelegte Dauer ausgewählt wird, während der autonome Fahrmodus aktiv ist.

4. System nach Anspruch 3, wobei die erste vorher festgelegte Dauer größer als die zweite vorher festgelegte Dauer ist.

5. System nach Anspruch 1, wobei die erste Taste (160) eine Drucktaste einschließt, wobei die erste Taste (160) ausgewählt wird, wenn die Drucktaste gedrückt wird.

6. System nach Anspruch 1, wobei die erste Taste (160) einen kapazitiven Sensor einschließt, wobei die erste Taste (160) ausgewählt wird, wenn der kapazitive Sensor berührt wird.

7. System nach Anspruch 1, wobei der erste Auswahlpunkt (130) ein Licht einschließt, das angeordnet ist, um die erste Taste (160) zu beleuchten, wobei der elektronische Controller (105) ferner dazu konfiguriert ist, das Licht einzuschalten, wenn der autonome Fahrmodus verfügbar ist.

8. System nach Anspruch 1, ferner umfassend eine Modusanzeigeleuchte (140), die an dem Lenkrad (200) des autonomen Fahrzeugs angeordnet ist und elektrisch an den elektronischen Controller (105) gekoppelt ist, wobei der elektronische Controller (105) ferner dazu konfiguriert ist, die Modusanzeigeleuchte (140) einzuschalten, wenn der autonome Fahrmodus aktiviert ist.

9. System nach Anspruch 1, ferner umfassend eine Mensch-Maschinen-Schnittstelle (125), die elektrisch an den elektronischen Controller (105) gekoppelt ist.

10. System nach Anspruch 9, wobei der elektronische Controller (105) ferner dazu konfiguriert ist, über die Mensch-Maschinen-Schnittstelle (125), mindestens eines ausgewählt aus einer Gruppe bestehend aus einem Lenkradbild (305) und Befehlen zum Aktivieren des autonomen Fahrmodus anzuzeigen.

11. System nach Anspruch 9, wobei der elektronische Controller (105) ferner dazu konfiguriert ist, über die Mensch-Maschinen-Schnittstelle (125), einen visuellen Countdown anzuzeigen, wenn sowohl die erste Taste (160) als auch die zweite Taste (170) ausgewählt wird.

12. System nach Anspruch 9, wobei der elektronische Controller (105) ferner dazu konfiguriert ist, über die Mensch-Maschinen-Schnittstelle (125), einen hörbaren Countdown zu erzeugen, wenn sowohl die erste Taste (160) als auch die zweite Taste (170) ausgewählt wird.

13. System nach Anspruch 9, wobei der elektronische Controller (105) ferner dazu konfiguriert ist, über die Mensch-Maschinen-Schnittstelle (125), einen hörbaren Ton zu erzeugen, wenn der autonome Fahrmodus aktiviert ist.

14. Verfahren zum Steuern eines autonomen Fahrmodus in einem autonomen Fahrzeug, das Verfahren umfassend:
Erfassen, wann eine erste Taste (160) ausgewählt wird;
Erfassen, wann eine zweite Taste (170) ausgewählt wird; und
Aktivieren, über einen elektronischen Controller (105), des autonomen Fahrmodus, wenn sowohl die erste Taste (160) als auch die zweite Taste (170) für mehr als eine erste vorher festgelegte Dauer ausgewählt wird,
wobei die erste Taste (160) und die zweite Taste (170) an einem Lenkrad (200) des autonomen Fahrzeugs angeordnet sind.

15. Verfahren nach Anspruch 14, ferner umfassend:
Deaktivieren, über den elektronischen Controller (105), des autonomen Fahrmodus, wenn sowohl die erste Taste (160) als auch die zweite Taste (170) für eine zweite vorher festgelegte Dauer ausgewählt wird, während der autonome Fahrmodus aktiv ist.

16. Verfahren nach Anspruch 15, wobei die erste vorher festgelegte Dauer größer als die zweite vorher festgelegte Dauer ist.

17. Verfahren nach Anspruch 14, ferner umfassend:
Beleuchten, über ein erstes Licht (165), der ersten Taste (160), wenn der autonome Fahrmodus verfügbar ist; und
Beleuchten, über ein zweites Licht (175), der zweiten Taste (170), wenn der autonome Fahrmodus verfügbar ist.

18. Verfahren nach Anspruch 14, ferner umfassend:
Einschalten einer Modusanzeigeleuchte (140), wenn der autonome Fahrmodus aktiviert wird, wobei die Modusanzeigeleuchte (140) an dem Lenkrad (200) des autonomen Fahrzeugs angeordnet ist.

19. Verfahren nach Anspruch 14, ferner umfassend:
Anzeigen, über eine Mensch-Maschinen-Schnittstelle (125), eines visuellen Countdowns, wenn sowohl die erste Taste (160) als auch die zweite Taste (170) ausgewählt wird.

20. Verfahren nach Anspruch 14, ferner umfassend:
Erzeugen, über eine Mensch-Maschinen-Schnittstelle (125), eines hörbaren Countdowns, wenn sowohl die erste Taste (160) als auch die zweite Taste (170) ausgewählt wird.

## Revendications

1. Système de commande d'un mode de conduite autonome dans un véhicule autonome, le système comprenant :
un premier point de sélection (130) disposé sur un volant de direction (200) du véhicule autonome et comprenant un premier bouton (160) ;
un second point de sélection (135) disposé sur le volant de direction (200) du véhicule autonome et comprenant un second bouton (170) ; et
un dispositif de commande électronique (105), couplé électriquement au premier point de sélection (130) et au second point de sélection (135), le dispositif de commande électronique (105) étant configuré pour :
détecter lorsque le premier bouton (160) est sélectionné,
détecter lorsque le second bouton (170) est sélectionné, et
activer le mode de conduite autonome lorsque le premier bouton (160) et le second bouton (170) sont tous deux sélectionnées pendant plus d'une première durée prédéterminée.

2. Système selon la revendication 1, le premier point de sélection (130) et le second point de sélection (135) étant positionnées sur des moitiés opposées d'un bord externe (205) du volant de direction (200).

3. Système selon la revendication 1, le dispositif de commande électronique (105) étant en outre configuré pour :
désactiver le mode de conduite autonome lorsque le premier bouton (160) et le second bouton (170) sont tous deux sélectionnés pendant une seconde durée prédéterminée tandis que le mode de conduite autonome est actif.

4. Système selon la revendication 3, la première durée prédéterminée étant supérieure à la seconde durée prédéterminée.

5. Système selon la revendication 1, le premier bouton (160) comprenant un bouton-poussoir, le premier bouton (160) étant sélectionné lorsque le bouton-poussoir est pressé.

6. Système selon la revendication 1, le premier bouton (160) comprenant un capteur capacitif, le premier bouton (160) étant sélectionné lorsque le capteur capacitif est touché.

7. Système selon la revendication 1, le premier point de sélection (130) comprenant une lumière positionnée pour éclairer le premier bouton (160), le dispositif de commande électronique (105) étant en outre configuré pour allumer la lumière lorsque le mode de conduite autonome est disponible.

8. Système selon la revendication 1, comprenant en outre une lumière d'indicateur de mode (140) disposée sur le volant de direction (200) du véhicule autonome et couplée électriquement au dispositif de commande électronique (105), le dispositif de commande électronique (105) étant en outre configuré pour allumer la lumière d'indicateur de mode (140) lorsque le mode de conduite autonome est activé.

9. Système selon la revendication 1, comprenant en outre une interface homme-machine (125) couplée électriquement au dispositif de commande électronique (105).

10. Système selon la revendication 9, le dispositif de commande électronique (105) étant en outre configuré pour afficher, par l'intermédiaire de l'interface homme-machine (125), au moins un élément sélectionné dans un groupe constitué d'une image de volant de direction (305) et d'instructions pour activer le mode de conduite autonome.

11. Système selon la revendication 9, le dispositif de commande électronique (105) étant en outre configuré pour afficher, par l'intermédiaire de l'interface homme-machine (125), un compte à rebours visuel lorsque le premier bouton (160) et le second bouton (170) sont tous deux sélectionnés.

12. Système selon la revendication 9, le dispositif de commande électronique (105) étant en outre configuré pour générer, par l'intermédiaire de l'interface homme-machine (125), un décompte audible lorsque le premier bouton (160) et le second bouton (170) sont tous deux sélectionnés.

13. Système selon la revendication 9, le dispositif de commande électronique (105) étant en outre configuré pour générer, par l'intermédiaire de l'interface homme-machine (125), une tonalité audible lorsque le mode de conduite autonome est activé.

14. Procédé de commande d'un mode de conduite autonome dans un véhicule autonome, le procédé comprenant :
la détection lorsqu'un premier bouton (160) est sélectionné ;
la détection lorsqu'un second bouton (170) est sélectionné ; et
l'activation, par l'intermédiaire d'un dispositif de commande électronique (105), du mode de conduite autonome lorsque le premier bouton (160) et le second bouton (170) sont tous deux sélectionnés pendant plus d'une première durée de temps prédéterminé,
le premier bouton (160) et le second bouton (170) étant disposés sur un volant de direction (200) du véhicule autonome.

15. Procédé selon la revendication 14, comprenant en outre :
la désactivation, par l'intermédiaire du dispositif de commande électronique (105), du mode de conduite autonome lorsque le premier bouton (160) et le second bouton (170) sont tous deux sélectionnés pendant une seconde durée prédéterminée tandis que le mode de conduite autonome est actif.

16. Procédé selon la revendication 15, la première durée prédéterminée étant supérieure à la seconde durée prédéterminée.

17. Procédé selon la revendication 14, comprenant en outre :
l'éclairage, par l'intermédiaire d'une première lumière (165), du premier bouton (160) lorsque le mode de conduite autonome est disponible ; et
l'éclairage, par l'intermédiaire d'une seconde lumière (175), du second bouton (170) lorsque le mode de conduite autonome est disponible.

18. Procédé selon la revendication 14, comprenant en outre :
l'allumage d'une lumière d'indicateur de mode (140) lorsque le mode de conduite autonome est activé, la lumière d'indicateur de mode (140) étant disposée sur le volant de direction (200) du véhicule autonome.

19. Procédé selon la revendication 14, comprenant en outre :
l'affichage, par l'intermédiaire d'une interface homme-machine (125), d'un compte à rebours visuel lorsque le premier bouton (160) et le second bouton (170) sont tous deux sélectionnés.

20. Procédé selon la revendication 14, comprenant en outre :
la génération, par l'intermédiaire d'une interface homme-machine (125), d'un compte à rebours audible lorsque le premier bouton (160) et le second bouton (170) sont tous deux sélectionnés.
